# EUROPEAN PATENT SPECIFICATION

(11) **EP 3 734 060 B1**
(45) Date of publication and mention of the grant of the patent: **27.09.2023**
(21) Application number: 20166377.0
(22) Date of filing: 27.03.2020
(51) Int. Cl.: F02M 65/00, F02M 47/02, F02M 57/00, G01L 23/10

(54) **A METHOD FOR MONITORING A COMMON-RAIL INJECTOR FOR LARGE DIESEL AND DUAL-FUEL ENGINES AND INJECTOR CONFIGURED TO IMPLEMENT THIS METHOD**
VERFAHREN ZUR MONITORING EINES COMMON-RAIL EINSPRITZVENTILS FÜR EINEN DUAL-KRAFTSTOFF GROSSMOTOR SOWIE EINSPRITZVENTIL ZUM AUSFÜHREN DES VERFAHRENS
METHODE DE SUIVI D'UN INJECTEUR A RAMPE COMMUNE POUR UN MOTEUR DE GRANDES DIMENSIONS ET BI-CARBURANT AINSI QU'INJECTEUR POUR EXECUTER CETTE METHODE

(30) Priority: 29.04.2019 IT 201900006428
(43) Date of publication of application: 04.11.2020
(73) Proprietor: OMT Digital S.r.l., 10122 Torino (IT)
(72) Inventor: COPPO, Marco, 10132 Torino (IT)
(74) Representative: Marchitelli, Mauro

(56) References cited:
- EP-A1- 2 216 539
- WO-A1-2017/186819
- DE-A1-102010 044 012
- DE-A1-102011 051 765
- DE-A1-102011 078 947
- DE-A1-102013 225 386
- DE-A1-102014 202 687
- DE-A1-102014 219 532
- DE-T5-112012 000 505

## Description

### Field of the invention

The present invention refers, in general, to injection systems for large diesel and dual-fuel engines, for example, for large naval engines.

More specifically, the invention relates to a method for monitoring an injector for common-rail injection systems for large diesel and dual-fuel engines.

According to another aspect, the present invention also relates to an injector for common-rail injection systems.

### Description of the prior art

A common-rail injection system comprises a pump that pressurizes the fuel in a high-pressure (common-rail) accumulator that feeds the injectors. The injectors are provided with a valve seat and an injector needle movable between a closed position and an open position. The position of the injector needle is determined by the intensity of two hydraulic forces generated by the action of pressurized fluid on appropriate surfaces of influence.

The pressurized fluid is fed into a delivery chamber located upstream of the valve seat. The pressure of the pressurized fluid in the delivery chamber acts in the opening direction of the injector needle. The fluid pressure in a control chamber generates a hydraulic force that acts in the closing direction of the injector needle. An electrically-operated control valve modulates the hydraulic pressure in the control chamber. Opening the control valve causes a reduction in the pressure in the control chamber to the point in which the force acting to open the injector needle is greater than the force acting to close it. In this condition, the injector needle rises from the valve seat thus causing fuel injection. To end the injection, the electrical command to the control valve is deactivated, which causes the valve to close and the pressure to rise again in the control chamber to the point where the force acting in the closing direction returns to prevail over that which acts in the opening direction, which causes the injector needle to start moving towards the closing direction.

The performances in terms of efficiency and emissions of diesel engines depend significantly on how the fuel is introduced into the combustion chamber because this influences the law of release of the heat into the cycle. Therefore, the injector is required to make a precise injection diagram, defined as the trend over time of the instantaneous flow injected. To obtain the design performances, it is important that the injector guarantees that they correspond to the design values: the injection start time, the rate of change of the fuel flow rate injected during the opening and closing steps, and the maximum level of the fuel flow rate injected.

An aging or anomaly of the injector that leads to creating a different injection diagram from that of the design involves a degradation of performances and an increase in consumption and/or emissions.

In dual-fuel engines running on gas, the injector injects a small amount of liquid fuel in order to start the air-gas mixture. Therefore, the stability of the pilot injection has a great effect on the stability of combustion. Having to dose very small quantities of fuel, degradation over time of the relationship between the duration of the command and the quantity of fuel injected is inevitable.

In view of the above, it is understood that it would be desirable to constantly monitor the operating parameters of the injectors in order to estimate the injection diagram actually obtained. Monitoring of the injector operating parameters allows the engine makers to modify the electrical controls generated by the engine control unit to bring the injection diagram of each injector as close as possible to the designed injection diagram and/or to suggest maintenance interventions aimed at restoring the optimal operating conditions of the injectors. This leads to significant savings in terms of fuel costs and/or reduced emissions. Furthermore, monitoring the injector operating parameters allows estimation of the residual useful life of the injector and its consumable parts, and to propose maintenance plans according to the real condition in which the individual components are located, avoiding unexpected failures.

Monitoring the operation of an injector is based on the analysis of signals generated by sensors arranged inside the injector, from which it is possible to obtain indications on the operating conditions of the injector that allow estimation of the injection diagram actually created.

Various monitoring methods are known in the state of the art based on the detection of different operating parameters. The main known monitoring methods are described below.

### 1. Detection of the switching of the control valve

This monitoring technique uses signals supplied by force sensors placed inside the control valve or a frequency analysis of the supply current of the control valve. These methods allow diagnosis of injector anomalies or drifts but require significant extrapolations based on models to predict the impact on injector performance.

### 2. Detection of the position of the injector needle

Measuring the position of the injector needle is very complex as the injector needle is completely immersed in the fuel at very high pressures. This makes it very complicated to place a sensor in the immediate vicinity of the injector needle. This in fact entails considerable difficulties in providing for the passage of the sensor connection cables from a very high pressure environment, guaranteeing tightness. Systems have been developed that use the injector needle as a switch that closes a first circuit when it is in contact with the sealing seat and a second circuit when it is in contact with the upper stroke-end. This technique only detects the extreme positions of the path of the injector needle, but does not provide information on the intermediate sections of the path.

Other techniques include the insertion of magnets on the injector needle and Hall Effect sensors that detect the variation of the magnetic field due to the relative movement between the magnet and the sensor. One of the problems of this solution is that the sensor must be placed beyond the metal wall that contains the injector needle and the fuel under pressure. This means that most of the magnetic field is shielded by the casing, making it difficult to obtain high signal-to-noise ratios. It is also difficult to arrange a sensor within thin walls arranged in the vicinity of the combustion chamber and subject to high temperatures. In addition, the injector pulverizer (consisting of the part including the injector needle and the nozzle) needs periodic replacements as it is subject to wear. The presence of a sensor in this part of the injector creates problems of electrical connection and the increase in the cost of spare parts.

### 3. Detection of the pressure in the fuel supply line

The opening of the injector needle generates pressure fluctuations in the supply line that connects the common-rail with the delivery chamber located upstream of the sealing seat of the injector. By analyzing these pressure fluctuations, it is possible to trace the opening and closing times of the injector needle. Furthermore, the extent of the fluctuations can be correlated with the flow rate of fuel passing through the supply line. This technique is effective for evaluating the operation of the injection stage but provides limited information on the operation of the control valve since the perturbations it generates during switching are not detected on the supply line due to the presence of calibrated orifices between the control valve and the power line. Therefore, with this technique it is not possible to use a single sensor to monitor the operation of the entire injector. Furthermore, in gas mode operation, the small quantity of fuel injected requires extremely reduced flow rates and therefore a very low signal/noise ratio, which does not allow an accurate diagnosis in such operating conditions.

### 4. Detection of the pressure in the control chamber

The pressure in the control chamber is influenced both by the operation of the control valve and by the operation of the injector needle. The pressure variations in the control chamber are high, regardless of the injected flow rate, which allows the operation in pilot injection mode to be analyzed well. One of the problems with detecting the pressure in the control chamber is that the control chamber has very small dimensions, so that it is not easy to insert a pressure sensor in this area. Therefore, the known solutions provide a small communication channel between the control chamber and a measuring chamber located in an area that allows easier measurement of the pressure.

DE 10 2011 051765 A1 and EP 2 216 539 A1 both describe systems in which a channel is formed in the injector body in communication with the control chamber, which carries the fluid, which is pressurized at the same pressure as the fluid contained in the control chamber, into an area external to the walls that delimit the control chamber. The pressure of the fluid present in said channel generates the deformation of a wall which on one side faces the channel containing the fluid under pressure and on the other side houses a strain sensor usually made with semiconductor materials.

These solutions have the following drawbacks:
i) the instantaneous pressure of the fluid inside the channel is not exactly equal to the instantaneous pressure in the control chamber because the channel-chamber system constitutes a hydraulic resonator that creates pressure oscillations, and the distortion due to the interference of pressure waves can disturb the signal, making analysis more difficult;
ii) the pressure waves generated by the pressure oscillations in the measurement channel overlap the pressure signal in the control chamber, altering the operating dynamics of the injector (invasive measurement method);
iii) modifying the architecture of the hydraulic circuit of the injector involves variations in the behavior of the injector with respect to an injector without a sensor;
iv) to limit the effects referred to in points i), ii) and iii), the additional circuit is made with reduced dimensions; in injectors operating with heavy fuel, obstruction of these channels could therefore occur, caused by deposits of residues present in the fuel due to the absence of the continuous circulation of the fluid, and this would entail a variation of the measured signal, even in the face of perfect operation of the injector, which would generate false alarms;
v) in the operation diagnostics of an injector for large naval engines, it is of particular importance detecting the instant in which the needle reaches, or leaves, the surface of the head plate that delimits the control chamber at the top, and creates the mechanical stop of the needle in its opening stroke; the known measurement methods are based on the analysis of the pressure signal in the channel to deduce the instants of stopping and detachment of the needle from its upper stop; this can lead to inaccurate results given that these events cannot always be easily defined at the algorithm level given the limited amplitude on the pressure signal of the perturbation induced by the needle when it enters the stop or leaves the upper stop surface.

Other prior art solutions disclose injectors provided with position sensors which detect the condition in which the injector needle is in the open position. Examples of these solutions are disclosed in WO2017/186819 A1 (which discloses the features of the pre-characterizing portion of claim 5) and DE 10 2010 044012 A1. These solutions provide only an ON/OFF signal relating to whether the injector needle is open or closed but cannot provide diagnostic data for monitoring the injector operation, e.g. for monitoring the rate of change of the fuel flow rate injected during the opening and closing steps, and the maximum level of the fuel flow rate injected.

### Object and summary of the invention

The present invention aims to provide a method for monitoring an injector for common-rail injector systems that overcomes the problems of the prior art.

According to the present invention, this object is achieved by a method having the characteristics forming the subject of claim 1.

According to another aspect, the present invention relates to an injector for common-rail injection systems having the characteristics forming the subject of claim 5.

The claims form an integral part of the disclosure provided here in relation to the invention.

### Brief description of the drawings

The present invention will now be described in detail with reference to the attached drawings, given purely by way of non-limiting example, wherein:
- Figure 1 is a schematic view illustrating the operation of an injector for common-rail injection systems,
- Figure 2 is an axial cross-section of an injector for common-rail injection systems,
- Figure 3 is a cross-section on an enlarged scale of the part indicated by the arrow III in Figure 2,
- Figure 4 is an enlarged detail of the part indicated by the arrow IV in Figure 3,
- Figure 5 is a diagram illustrating an injector monitoring system,
- Figure 6 is a graph illustrating theoretical injection diagrams of an injector,
- Figure 7 is a diagram illustrating the trend of the supply current of the control valve of an injector, and
- Figure 8 is a diagram illustrating the trend of a monitoring signal of the injector together with an injection diagram created by the injector.

### Detailed description

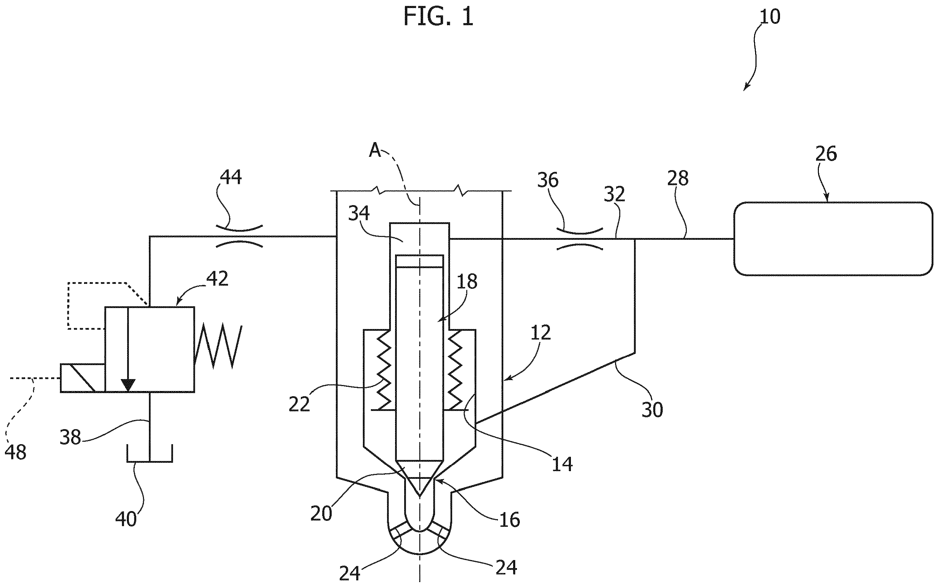

In Figure 1, an injector for a common-rail injection system is indicated by 10. The injector 10 comprises a pulverizer 12 having a fuel delivery chamber 14 having a valve seat 16. An injector needle 18 extends into the delivery chamber 14 and has a sealing surface 20 that cooperates with the valve seat 16. The injector needle 18 is movable along its longitudinal axis A between a closed position in which the sealing surface 20 abuts against the valve seat 16, and an open position in which the sealing surface 20 is spaced apart from the valve seat 16. A spring 22 tends to push the injector needle 18 towards the closed position. The pulverizer 12 has a plurality of injection holes 24 through which the pressurized fuel located in the delivery chamber 14 is pulverized when the injector needle 18 is in the open position.

The injector 10 comprises a storage volume 26 which, together with similar storage volumes of other injectors of the same engine, constitutes a distributed common-rail. The storage volume 26 is filled with pressurized fuel coming from a high-pressure pump. The storage volume 26 is connected to a supply duct 28 having a first branch 30 connected to the delivery chamber 14 of the pulverizer 12 and a second branch 32 connected to a control chamber 34 through a first calibrated orifice 36. The control chamber 34 is connected to a discharge line 38 which leads to a tank 40. A control valve 42 is arranged on the discharge line 38. The control valve 42 is an electrically-controlled two-position valve which - in the open position - connects the control chamber 34 to the discharge line 38 and - in the closed position - isolates the control chamber 34 from the discharge line 38. A second calibrated orifice 44 is arranged upstream of the control valve 42.

When the control valve 42 is closed, the pressure in the control chamber 34 is equal to the pressure in the delivery chamber 14 which - in turn - is equal to the pressure in the storage volume 26. In the closed position of the injector needle 18, the surface of influence of the injector needle 18 exposed in the control chamber 34 is greater than the surface of influence of the injector needle 18 exposed in the delivery chamber 14, so that a hydraulic force is generated on the injector needle 18 which pushes the injector needle 18 into the closed position. When the control valve 42 is opened, the pressure in the control chamber 34 is reduced and the injector needle 18 is subjected to a resulting hydraulic force which moves the injector needle 18 towards the open position.

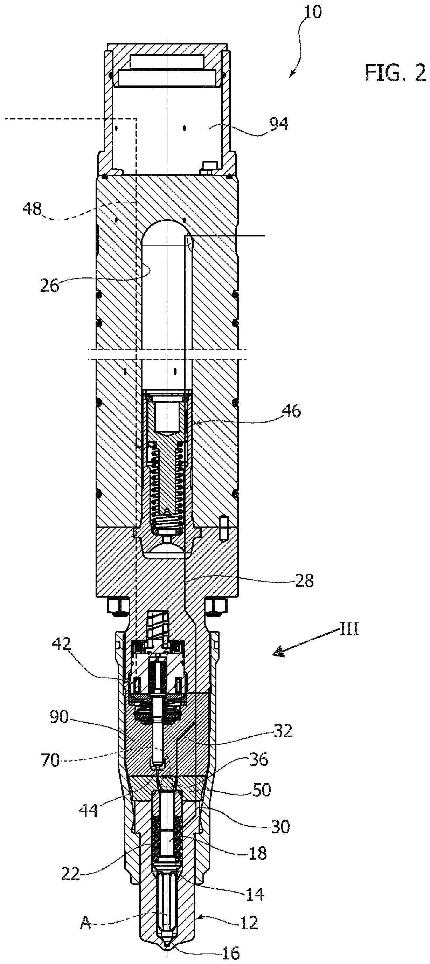

Figures 2, 3 and 4 illustrate an embodiment of an injector according to the present invention which operates on the basis of the operating principle described with reference to Figure 1. The elements corresponding to those previously described are indicated with the same numerical references.

With reference to Figure 2, a flow rate limiting valve 46 can be provided on the fuel supply line 28, which extends from the storage volume 26 to the delivery chamber 14 of the pulverizer 12. The control valve 42 can be housed inside the injector 10, and is connected to an electric line 48 which gives the control valve 42 an electric opening command.

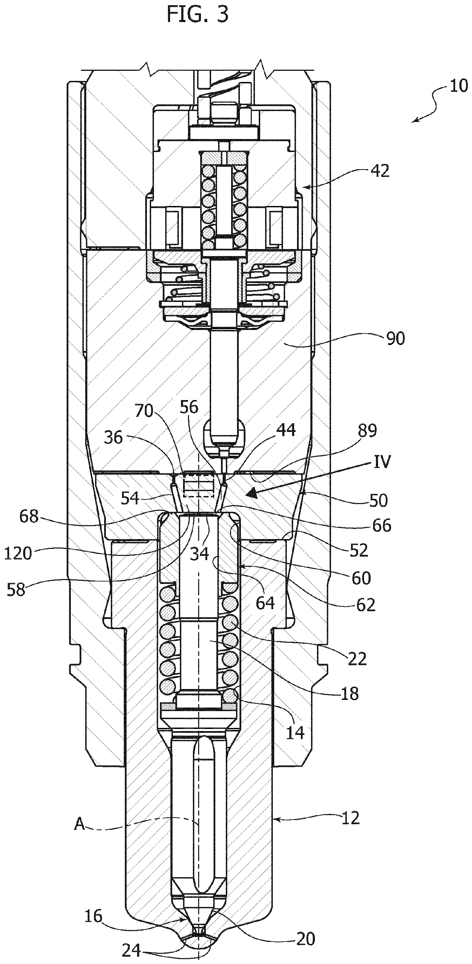

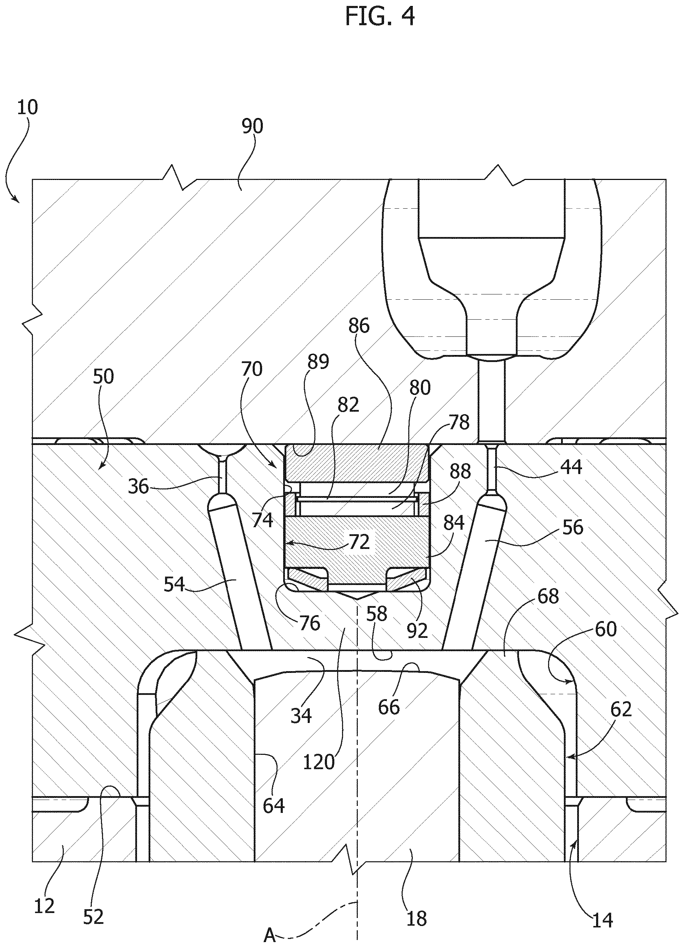

With reference to Figures 3 and 4, the injector 10 comprises a head plate 50 arranged in hydraulic sealing contact with a head surface 52 of the pulverizer 12.

In the head plate 50 the calibrated orifices 36, 44 are formed, which are connected to the control chamber through respective holes 54, 56 which are also formed in the head plate 50. The holes 54, 56 are open on a reaction surface 58 of the head plate 50 facing the control chamber 34. The reaction surface 58 of the head plate 50 can be formed in a seat 60 open towards the delivery chamber 14 of the pulverizer 12. A bushing 62 is partially housed inside the seat 60 and has a hole 64 in which a head portion of the injector needle 18 slides. The control chamber 34 is delimited by the reaction surface 58 of the head plate 50, by a head surface 66 of the injector needle 18 and by an annular portion 68 of the guide bushing 62.

In the open position of the injector needle 18, the head surface 66 of the injector needle 18 comes into contact with the reaction surface 58.

With reference to Figure 4, the head plate 50 comprises an integral diaphragm 120 formed by a portion of the head plate 50 with reduced thickness. The diaphragm 120 has a first surface in direct contact with the pressurized fluid contained in the hydraulic chamber 34. The first surface of the diaphragm 120 may consist of a portion of the reaction surface 58. The diaphragm 120 has a second surface opposite the first surface, which is not in contact with the pressurized fluid contained in the hydraulic chamber 34. In the illustrated embodiment, the diaphragm 120 is located at the bottom of a blind hole 72 formed in the head plate 50. The blind hole 72 has a side surface 74 and a bottom surface 76 forming the second surface of the diaphragm 120.

With reference to Figures 3 and 4, the injector 10 comprises a sensor 70 which provides an electrical signal for monitoring the operation of the injector 10.

The sensor 70 can be a piezoelectric pressure transducer that provides an electrical signal related to the pressure acting on the reaction surface 58 of the head plate 50 in the direction of the longitudinal axis A. The electrical signal supplied by the sensor 70 is indicative of the deformations of the diaphragm 120 generated by the variations in fluid pressure in the control chamber 34 and by the variation in the force with which the injector needle 18 comes into contact with the reaction surface 58.

The sensor 70 may comprise two piezoelectric elements 78, 80 each of which has two flat faces parallel to each other and orthogonal to the axis A. The use of a piezoelectric sensor 70 allows withstanding much higher operating temperatures than those permitted by other types of sensitive materials.

Each of the two piezoelectric elements 78, 80 generates an accumulation of positive charges on a first face and negative charges on the second face opposite to the first. The amount of electric charges generates a potential difference that increases proportionally to the deformation of the piezoelectric element 78, 80 in the direction of the A axis.

Between the two piezoelectric elements 78, 80 there is an electrode 82 formed by a sheet of conductive material arranged in contact with the first faces of the two piezoelectric elements 78, 80, having a positive polarization under load.

The sensor 70 also comprises two supporting elements 84, 86 of metal material arranged in contact with the second faces of the piezoelectric elements 78, 80, having a negative polarization under load.

The electrode 82 arranged between the two piezoelectric elements 78, 80 constitutes the positive pole of the sensor 70. The negative pole consists of the supports 84, 86 electrically-connected to ground through the head plate 50. The electrode 82 is connected to an electric cable on which an analogue electrical signal is generated, proportional to the force acting between the two supports 84, 86 in the direction of the longitudinal axis A.

An annular element 88 of insulating material is arranged outside the electrode 82. The annular element 88 allows the centering between the piezoelectric elements 78, 80 and the electrode 82 and guarantees the isolation of the electrode 82 from the negative pole consisting of the metal components of the injector.

The sensor 70 is housed in the hole 72 and is compressed axially between the bottom surface 76 of the hole 72 and a surface 89 of a body portion 90 of the injector 10. An elastic element 92, formed for example by a cup spring, can be arranged between the support 84 and the bottom surface 76 of the hole 72. The elastic element 92 allows adjustment of the force transmitted to the piezoelectric elements 78, 80 according to the deformation of the reaction surface 58 of the head plate 50 under the action of the pressure acting in the control chamber 34. In this way, it is possible to guarantee an adequate thickness of the wall arranged between the surfaces 58 and 76 and, therefore, the structural strength of the head plate 50 under the action of the pressure in the control chamber 34, and at the same time to ensure that the deformation of the reaction surface 58 does not generate excessive loads on the piezoelectric elements 78, 80.

By an appropriate choice of the dimensions and geometry of the elastic element 92, its rigidity is adapted to the compression force and, consequently, the overall rigidity of the components of the sensor 70 is modified so that the deformation of these components imposed by the displacement of the surface 76 generates a force compatible with the working field of the at least one piezoelectric element 78, 80.

The facing and opposite arrangement of the piezoelectric elements 78, 80 doubles the sensitivity of the sensor 70 with respect to a sensor that uses a single piezoelectric element and simplifies its construction since it uses the same piezoelectric elements 78, 80 as electrical insulation elements between the positive pole and the negative pole and avoids the introduction of further elements of insulating material into the stack of elements that support the load to which the sensor 70 is subject.

The sensor 70 has very small dimensions and can be easily housed between the calibrated orifices 36, 44 of the head plate 50.

The sensor 70 is capable of providing an indirect measurement of the hydraulic pressure in the control chamber 34 without any contact with the fuel. In fact, the pressure of the fuel in the control chamber 34 causes deformations of the diaphragm 120 which are detected by the sensor 70 with an excellent signal/noise ratio.

In the operation diagnostics of an injector for large naval engines, detection of the moments in which the injector needle 18 comes into contact with, or detaches from, the reaction surface 58, which implements the mechanical stop of the injector needle 18 during its opening path, is particularly important. A particularly advantageous feature of the method and the apparatus according to the invention is that the injector needle 18 in the open position enters directly into contact with the diaphragm 120. The sensor 70 is mechanically coupled to the diaphragm 120 and detects - with high precision - the instant in which the injector needle 18 comes into contact with the reaction surface 58 (which is the instant in which the opening stroke of the injector needle 18 ends) and the instant in which the injector needle 18 detaches from the reaction surface 58 (which is the instant in which the closing stroke of the injector needle 18 begins).

The sensor 70, therefore, provides a signal that is directly related, without delay or disturbance, to the pressure existing in the control chamber and to the force with which the injector needle 18 rests against the reaction surface 58. The measurement is not invasive, as the hydraulic circuit that performs the injector control by modulating the pressure in the control chamber is not altered (standard injector and one equipped with diagnostic instrumentation behave identically).

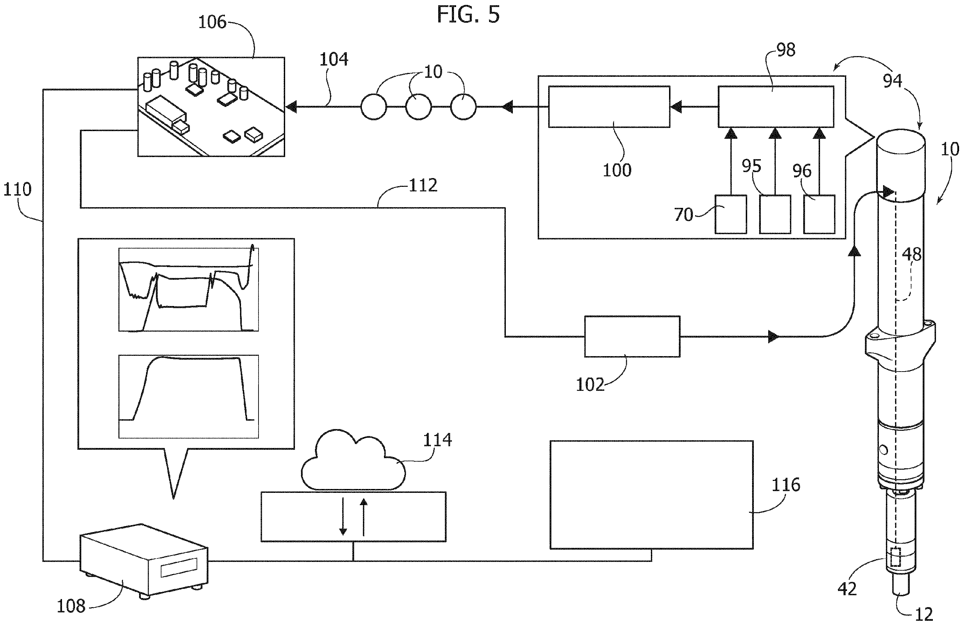

With reference to Figure 5, each injector 10 comprises an electronic board 94 which can be mounted on the end of the injector 10 opposite the pulverizer 12. The electronic board 94 receives analog signals coming from the pressure sensor 70 and, possibly, from a temperature sensor 95 and from a current sensor 96, which indicates the value of the driving current of the control valve 42. The analog signals from the sensors 70, 95, 96 can be sent to an analog/digital converter 98 which can be connected to a microprocessor 100. The microprocessor 100 may contain an identification number of the injector 10, data indicative of the number of operating hours, an identification code of the customer, as well as any other information. The electronic board 94 of the injector 10 receives the driving current of the control valve 42 from an engine control unit 102 and sends the driving current to the control valve 42 via the electric line 48 located inside the injector 10.

The microprocessor 100 of the electronic board 94 can be connected to a communication channel 104, which can be implemented by means of a BUS, for example, of the RS485 type, to which other injectors 10 of the same engine can be connected. The communication channel 104 can be connected to an interface circuit 106 which can interface communication lines with different communication protocols. The interface circuit 106 can be connected to a processing system 108, for example, via an Ethernet line 110. The interface circuit 106 can also be connected to the engine control unit 102 via a CAN line 112.

The processing system 108 receives the signals coming from the electronic boards 94 of all the injectors 10 of the same engine and processes them to obtain, for example, the following information: opening time of the control valve, start time of injection, end time of the injector needle opening, start time of injector needle closure, end time of injection, maximum value of the injected flow rate. The information processed by the processing system 108 can be stored locally or transferred to a remote server 114. A user interface 116 allows access to the information stored in the processing system 108 and/or in the remote server 114.

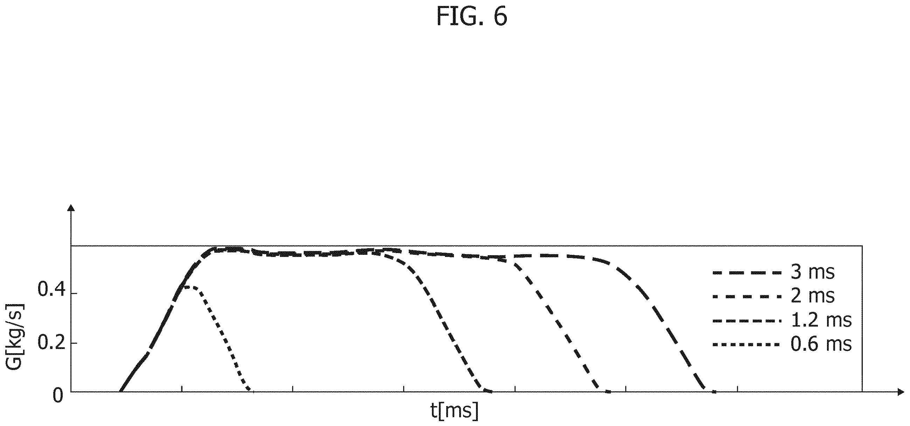

Figure 6 illustrates an injection diagram of an injector 10 which shows the flow rate G of fuel injected in time t for four values of duration of the electric control to the control valve 42. The injectors 10 should create the injection diagrams envisaged by the design respecting the injection start times, the speed of variation of the flow rate in the opening and closing steps, and the maximum level of flow dispensed.

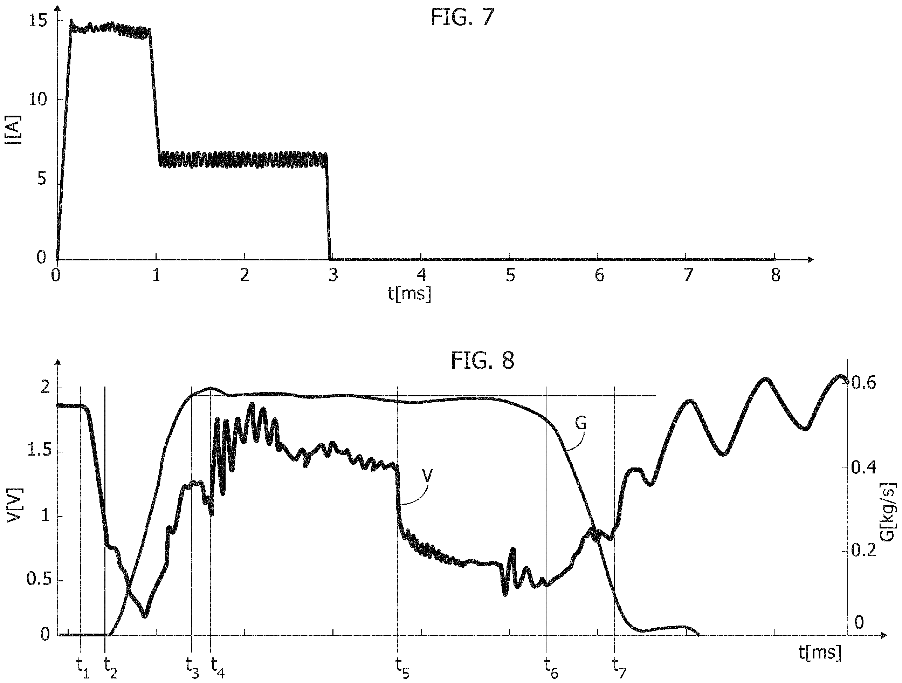

Figure 7 shows the value of the driving current I of the control valve 42 as a function of the time t during an injection cycle. Figure 8 reports the signal V provided by the sensor 70, indicative of the deformation of the head plate 50 under the action of the hydraulic pressure in the control chamber 34. The signal V is also indicative of the force that the injector needle 18 transfers to the head plate 50 when the head surface 66 of the injector needle 18 abuts against the reaction surface 58 of the head plate 50, since the head plate 50 also acts as an opening stroke-end regarding the injector needle 18.

Figures 6, 7, 8 report real values which are specific of a given injector. The numerical values indicated in these figures are given only by way of example and it is intended that the present invention can be applied to different injector models operating with different timing and signal amplitudes.

Analyzing the variation of the signal V allows the most significant instants of the injector operating cycle to be clearly distinguished. The same diagram in Figure 8 reports the curve G that indicates the injection diagram (flow rate of fuel injected as a function of time) measured at the test bench simultaneously with the monitoring signal V. From the trend of the signal V it is possible to identify the following steps of the injector cycle:
- t1: opening of the control valve,
- t2: opening of the injector needle,
- t3: start of delivery of the maximum flow rate,
- t4: injector needle at the opening stroke-end,
- t5: start of closing of the injector needle,
- t6: end of delivery of the maximum flow rate,
- t7: closing the injector.

From the example shown in Figure 8 it can be seen that the deformation signal V shows significant variations during the injection cycle and has a very low noise. Therefore, the signal V allows extraction of significant data in a robust way. Using artificial intelligence techniques on the basis of the signal V, it is possible to extrapolate the maximum flow rate delivered during the injection cycle, thus obtaining all the elements necessary to reconstruct the actual injection diagram of the injector.

The diaphragm 120 of the head plate 50 is deformed both by the pressure existing in the control chamber 34 and by the force transmitted by the injector needle 18 when it is in contact with the diaphragm 120. The resulting signal is, therefore, both sensitive to pressure and to the position of the needle, in a direct manner. As can be easily deduced from the analysis of the signal reported in Figure 8, when the injector needle reaches (or leaves) the reaction surface, significant variations of the signal are measured, allowing development of a simple and robust automatic recognition algorithm for these moments.

The information provided by the signal V allows constant monitoring of the injector operating parameters in order to estimate the shape of the actual injection diagram. This allows the engine makers to modify the electrical control generated by the engine control unit 102 to restore the injector operation to the optimal operating conditions and/or to suggest maintenance interventions.

## Claims

1. A method for monitoring an injector (10) for common-rail injection systems, comprising:
- providing a head plate (50) having formed therein a calibrated inlet orifice (36) and a calibrated outlet orifice (44) connected to a control chamber (34) through respective holes (54, 56) formed in the head plate (50), wherein said holes (54, 56) are open on a reaction surface (58) of the head plate (50) facing the control chamber (34), wherein the control chamber (34) is delimited partly by a head surface (66) of an injector needle (18) and partly by said reaction surface (58) of said head plate (50), wherein the head surface (66) of the injector needle (18) in the open position of the injector needle (18) abuts against said reaction surface (58), and wherein a blind hole (72) is formed in the head plate (50), said blind hole (72) forming a portion of the head plate (50) with reduced thickness, wherein the head plate (50) comprises an integral diaphragm (120) formed between a first surface consisting of a portion of the reaction surface (58) in direct contact with the pressurized fluid contained in the hydraulic chamber (34) and a second surface opposite the first surface, located at the bottom of the blind hole (72), which is not in contact with the pressurized fluid contained in the hydraulic chamber (34), and
- providing a sensor (70) housed in said blind hole (72) formed in the head plate (50) and isolated from the control chamber (34) of the injector (10) by said diaphragm (120), which supplies an electrical signal indicative of the deformations of said diaphragm (120), and
- processing said electrical signal (V) to determine characteristic data of the injector operation (10).

2. A method according to claim 1, wherein the electrical signal (V) indicative of the deformation of said diaphragm (120) is provided by a piezoelectric sensor (70) housed in a blind hole (72) formed in the head plate (50) and isolated from the control chamber (34) of the injector (10) by said diaphragm (120).

3. A method according to claim 1 or claim 2, wherein said electrical signal (V) is indicative of the deformation of said diaphragm (120) along a longitudinal axis (A) of the injector needle (18).

4. A method according to any one of the preceding claims, wherein said electrical signal (V) indicative of the deformation of said diaphragm (120) is analyzed to determine one or more of the following operating parameters of the injector: opening time of the control valve; opening time of the injector needle; start time of delivery of the maximum flow rate; time of reaching the stroke-end position of the injector needle opening; start time of closing the injector needle; end time of delivery of the maximum flow rate; time of closure of the injector needle, and maximum injected flow rate.

5. An injector (10) for common-rail injection systems, comprising:
- a pulverizer (12) having a head surface (52) and a fuel delivery chamber (14) connected to a pressurized fuel supply line (28) and provided with a valve seat (16),
- an injector needle (18) extending through said delivery chamber (14) and having a sealing surface (20) that cooperates with said valve seat (16), wherein the injector needle (18) is movable along a longitudinal axis (A) between a closed position in which said sealing surface (20) abuts against said valve seat (16), and an open position in which said sealing surface (20) is spaced apart from said valve seat (16),
- a control chamber (34) connected to said fuel supply line (28) through a calibrated inlet orifice (36) and connected to a discharge line (38) through a calibrated outlet orifice (44), and
- an electrically-operated control valve (42) arranged to selectively open and close the hydraulic communication between the control chamber (34) and the discharge line (38),
**characterized by**:
- a head plate (50) arranged in hydraulic sealing contact with said head surface (52) of the pulverizer (12), wherein said calibrated inlet orifice (36) and calibrated outlet orifice (44) are formed in the head plate (50) and are connected to the control chamber (34) through respective holes (54, 56) formed in the head plate (50), wherein said holes (54, 56) are open on a reaction surface (58) of the head plate (50) facing the control chamber (34), wherein the control chamber (34) is delimited partly by a head surface (66) of the injector needle (18) and partly by said reaction surface (58) of said head plate (50), wherein the head surface (66) of the injector needle (18) in the open position of the injector needle (18) abuts against said reaction surface (58), and wherein a blind hole (72) is formed in the head plate (50), said blind hole (72) forming a portion of the head plate (50) with reduced thickness, wherein the head plate (50) comprises an integral diaphragm (120) formed between a first surface consisting of a portion of the reaction surface (58) in direct contact with the pressurized fluid contained in the hydraulic chamber (34) and a second surface opposite the first surface, located at the bottom of the blind hole (72), which is not in contact with the pressurized fluid contained in the hydraulic chamber (34), and
- a sensor (70) housed in said blind hole (72) formed in the head plate (50) and isolated from the control chamber (34) of the injector (10) by said diaphragm (120), which supplies an electrical signal indicative of the deformations of said diaphragm (120).

6. An injector according to claim 5, wherein said sensor (70) is a piezoelectric transducer.

7. An injector according to claim 5, wherein said hole (72) has a side surface (74) coaxial to said longitudinal axis (A) and a bottom surface (76) parallel and opposite to the reaction surface (58) of the diaphragm (120).

8. An injector according to any one of claims 5-7, wherein said sensor (70) comprises two piezoelectric elements (78, 80) oriented perpendicularly to said longitudinal axis (A) and an electrode (82) arranged between said piezoelectric elements (78, 80).

9. An injector according to any of claims 5-8 comprising an electronic board (94) located on the injector (10) and configured for connection to a processing system (108) for processing the signal (V) provided by said sensor (70).

## Patentansprüche

1. Verfahren zum Überwachen eines Einspritzventils (10) für Common-Rail-Einspritzsysteme, umfassend:
- Bereitstellen einer Kopfplatte (50), in der eine kalibrierte Einlassöffnung (36) und eine kalibrierte Auslassöffnung (44) ausgebildet sind, die mit einer Steuerkammer (34) über jeweilige in der Kopfplatte (50) ausgebildete Löcher (54, 56) verbunden sind, wobei die Löcher (54, 56) auf einer Reaktionsfläche (58) der Kopfplatte (50) geöffnet sind, die der Steuerkammer (34) zugewandt ist, wobei die Steuerkammer (34) teilweise durch eine Kopffläche (66) einer Einspritzventilnadel (18) und teilweise durch die Reaktionsfläche (58) der Kopfplatte (50) begrenzt ist, wobei die Kopffläche (66) der Einspritzventilnadel (18) in der geöffneten Position der Einspritzventilnadel (18) an der Reaktionsfläche (58) anliegt, und wobei ein Sackloch (72) in der Kopfplatte (50) ausgebildet ist, wobei das Sackloch (72) einen Abschnitt der Kopfplatte (50) mit verringerter Dicke bildet, wobei die Kopfplatte (50) eine integrale Membran (120) umfasst, die zwischen einer ersten Fläche, die aus einem Abschnitt der Reaktionsfläche (58) besteht, der in direktem Kontakt mit dem in der Hydraulikkammer (34) enthaltenen druckbeaufschlagten Fluid steht, und einer zweiten Fläche gegenüber der ersten Fläche, die sich an der Unterseite des Sacklochs (72) befindet, die nicht in Kontakt mit dem in der Hydraulikkammer (34) enthaltenen druckbeaufschlagten Fluid steht, ausgebildet ist, und
- Bereitstellen eines in dem Sackloch (72) aufgenommenen Sensors (70), der in der Kopfplatte (50) ausgebildet und von der Steuerkammer (34) des Einspritzventils (10) durch die Membran (120) isoliert ist, der ein elektrisches Signal liefert, das die Verformungen der Membran (120) anzeigt, und
- Verarbeiten des elektrischen Signals (V), um charakteristische Daten des Einspritzventilbetriebs (10) zu bestimmen.

2. Verfahren nach Anspruch 1, wobei das elektrische Signal (V), das die Verformung der Membran (120) anzeigt, durch einen piezoelektrischen Sensor (70) bereitgestellt wird, der in einem Sackloch (72) aufgenommen ist, das in der Kopfplatte (50) ausgebildet und von der Steuerkammer (34) des Einspritzventils (10) durch die Membran (120) isoliert ist.

3. Verfahren nach Anspruch 1 oder Anspruch 2, wobei das elektrische Signal (V) die Verformung der Membran (120) entlang einer Längsachse (A) der Einspritzventilnadel (18) anzeigt.

4. Verfahren nach einem der vorhergehenden Ansprüche, wobei das elektrische Signal (V), das die Verformung der Membran (120) anzeigt, analysiert wird, um einen oder mehrere der folgenden Betriebsparameter des Einspritzventils zu bestimmen: Öffnungszeit des Steuerventils; Öffnungszeit der Einspritzventilnadel; Startzeit einer Zufuhr der maximalen Durchflussrate; Zeit eines Erreichens der Hubendposition der Einspritzventilnadelöffnung; Startzeit eines Schließens der Einspritzventilnadel; Endzeit einer Zufuhr der maximalen Durchflussrate; Zeit eines Schließens der Einspritzventilventilnadel und eine maximale eingespritzte Durchflussrate.

5. Einspritzventil (10) für Common-Rail-Einspritzsysteme, umfassend:
- einen Zerstäuber (12), der eine Kopffläche (52) und eine Kraftstoffzufuhrkammer (14), die mit einer Druckfluidversorgungsleitung (28) verbunden ist und mit einem Ventilsitz (16) versehen ist, aufweist,
- eine Einspritzventilnadel (18), die sich durch die Zufuhrkammer (14) erstreckt und eine Dichtungsfläche (20) aufweist, die mit dem Ventilsitz (16) zusammenwirkt, wobei die Einspritzventilnadel (18) entlang einer Längsachse (A) zwischen einer geschlossenen Position, in der die Dichtungsfläche (20) an dem Ventilsitz (16) anliegt, und einer geöffneten Position, in der die Dichtungsfläche (20) von dem Ventilsitz (16) beabstandet ist, beweglich ist,
- eine Steuerkammer (34), die mit der Kraftstoffversorgungsleitung (28) über eine kalibrierte Einlassöffnung (36) verbunden ist und mit einer Ablassleitung (38) über eine kalibrierte Auslassöffnung (44) verbunden ist, und
- ein elektrisch betriebenes Steuerventil (42), das dazu angeordnet ist, die Hydraulikverbindung zwischen der Steuerkammer (34) und der Ablassleitung (38) gezielt zu öffnen und zu schließen,
**gekennzeichnet durch**:
- eine Kopfplatte (50), die in hydraulisch abdichtendem Kontakt mit der Kopffläche (52) des Zerstäubers (12) angeordnet ist, wobei die kalibrierte Einlassöffnung (36) und die kalibrierte Auslassöffnung (44) in der Kopfplatte (50) ausgebildet und mit der Steuerkammer (34) über jeweilige Löcher (54, 56) verbunden sind, die in der Kopfplatte (50) ausgebildet sind, wobei die Löcher (54, 56) auf einer Reaktionsfläche (58) der Kopfplatte (50) geöffnet sind, die der Steuerkammer (34) zugewandt ist, wobei die Steuerkammer (34) teilweise durch eine Kopffläche (66) der Einspritzventilnadel (18) und teilweise durch die Reaktionsfläche (58) der Kopfplatte (50) begrenzt ist, wobei die Kopffläche (66) der Einspritzventilnadel (18) in der geöffneten Position der Einspritzventilnadel (18) an der Reaktionsfläche (58) anliegt, und wobei ein Sackloch (72) in der Kopfplatte (50) ausgebildet ist, wobei das Sackloch (72) einen Abschnitt der Kopfplatte (50) mit verringerter Dicke bildet, wobei die Kopfplatte (50) eine integrale Membran (120) umfasst, die zwischen einer ersten Fläche, die aus einem Abschnitt der Reaktionsfläche (58) besteht, der in direktem Kontakt mit dem in der Hydraulikkammer (34) enthaltenen druckbeaufschlagten Fluid steht, und einer zweiten Fläche gegenüber der ersten Fläche, die sich an der Unterseite des Sacklochs (72) befindet, die nicht in Kontakt mit dem in der Hydraulikkammer (34) enthaltenen druckbeaufschlagten Fluid steht, ausgebildet ist, und
- einen in dem Sackloch (72) aufgenommenen Sensor (70), der in der Kopfplatte (50) ausgebildet und von der Steuerkammer (34) des Einspritzventils (10) durch die Membran (120) isoliert ist, der ein elektrisches Signal liefert, das die Verformungen der Membran (120) anzeigt.

6. Einspritzventil nach Anspruch 5, wobei der Sensor (70) ein piezoelektrischer Wandler ist.

7. Einspritzventil nach Anspruch 5, wobei das Loch (72) eine Seitenfläche (74) koaxial mit der Längsachse (A) und eine untere Fläche (76) parallel zu und gegenüber der Reaktionsfläche (58) der Membran (120) aufweist.

8. Einspritzventil nach einem der Ansprüche 5-7, wobei der Sensor (70) zwei piezoelektrische Elemente (78, 80), die senkrecht zu der Längsachse (A) ausgerichtet sind, und eine Elektrode (82), die zwischen den piezoelektrischen Elementen (78, 80) angeordnet ist, umfasst.

9. Einspritzventil nach einem der Ansprüche 5-8, umfassend eine elektronische Platine (94), die sich an dem Einspritzventil (10) befindet und für eine Verbindung mit einem Verarbeitungssystem (108) zum Verarbeiten des durch den Sensor (70) bereitgestellten Signals (V) ausgelegt ist.

## Revendications

1. Procédé de surveillance d'un injecteur (10) pour systèmes d'injection à rampe commune, comportant les étapes consistant à :
- mettre en place une plaque (50) de tête dans laquelle sont formés un orifice (36) d'entrée calibré et un orifice (44) de sortie calibré relié à une chambre (34) de régulation à travers des trous (54, 56) respectifs formés dans la plaque (50) de tête, lesdits trous (54, 56) étant ouverts sur une surface (58) de réaction de la plaque (50) de tête faisant face à la chambre (34) de régulation, la chambre (34) de régulation étant délimitée en partie par une surface (66) de tête d'un pointeau (18) d'injecteur et en partie par ladite surface (58) de réaction de ladite plaque (50) de tête, la surface (66) de tête du pointeau (18) d'injecteur, dans la position ouverte du pointeau (18) d'injecteur, portant contre ladite surface (58) de réaction, et un trou borgne (72) étant formé dans la plaque (50) de tête, ledit trou borgne (72) formant une partie d'épaisseur réduite de la plaque (50) de tête, la plaque (50) de tête comportant un diaphragme intégré (120) formé entre une première surface constituée d'une partie de la surface (58) de réaction en contact direct avec le fluide sous pression contenu dans la chambre hydraulique (34) et une seconde surface opposée à la première surface, située au fond du trou borgne (72), qui n'est pas en contact avec le fluide sous pression contenu dans la chambre hydraulique (34), et
- mettre en place un capteur (70) logé dans ledit trou borgne (72) formé dans la plaque (50) de tête et isolé de la chambre (34) de régulation de l'injecteur (10) par ledit diaphragme (120), qui fournit un signal électrique indicatif des déformations dudit diaphragme (120), et
- traiter ledit signal électrique (V) pour déterminer des données caractéristiques du fonctionnement de l'injecteur (10).

2. Procédé selon la revendication 1, le signal électrique (V) indicatif de la déformation dudit diaphragme (120) étant fourni par un capteur piézoélectrique (70) logé dans un trou borgne (72) formé dans la plaque (50) de tête et isolé de la chambre (34) de régulation de l'injecteur (10) par ledit diaphragme (120).

3. Procédé selon la revendication 1 ou la revendication 2, ledit signal électrique (V) étant indicatif de la déformation dudit diaphragme (120) suivant un axe longitudinal (A) du pointeau (18) d'injecteur.

4. Procédé selon l'une quelconque des revendications précédentes, ledit signal électrique (V) indicatif de la déformation dudit diaphragme (120) étant analysé pour déterminer un ou plusieurs des paramètres de fonctionnement suivants de l'injecteur : instant d'ouverture de la soupape de commande ; instant d'ouverture du pointeau d'injecteur ; instant de début de distribution du débit maximum ; instant d'atteinte de la position de fin de course d'ouverture du pointeau d'injecteur ; instant de début de fermeture du pointeau d'injecteur ; instant de fin de distribution du débit maximum ; instant de fermeture du pointeau d'injecteur, et débit injecté maximum.

5. Injecteur (10) pour systèmes d'injection à rampe commune, comportant :
- un pulvérisateur (12) doté d'une surface de tête (52) et d'une chambre (14) de distribution de carburant reliée à une canalisation (28) d'alimentation en carburant sous pression et muni d'un siège (16) de soupape,
- un pointeau (18) d'injecteur s'étendant à travers ladite chambre (14) de distribution et présentant une surface (20) d'étanchéité qui coopère avec ledit siège (16) de soupape, le pointeau (18) d'injecteur pouvant être déplacé suivant un axe longitudinal (A) entre une position fermée dans laquelle ladite surface (20) d'étanchéité porte contre ledit siège (16) de soupape, et une position ouverte dans laquelle ladite surface (20) d'étanchéité est écartée dudit siège (16) de soupape,
- une chambre (34) de régulation reliée à ladite canalisation (28) d'alimentation en carburant à travers un orifice (36) d'entrée calibré et reliée à une canalisation (38) de refoulement à travers un orifice (44) de sortie calibré, et
- une soupape (42) de commande manoeuvrée électriquement disposée de façon à ouvrir et fermer sélectivement la communication hydraulique entre la chambre (34) de régulation et la canalisation (38) de refoulement, **caractérisée par** :
- une plaque (50) de tête disposée en contact d'étanchéité hydraulique avec ladite surface de tête (52) du pulvérisateur (12), ledit orifice (36) d'entrée calibré et ledit orifice (44) de sortie calibré étant formés dans la plaque (50) de tête et étant reliés à la chambre (34) de régulation à travers des trous (54, 56) respectifs formés dans la plaque (50) de tête, lesdits trous (54, 56) étant ouverts sur une surface (58) de réaction de la plaque (50) de tête faisant face à la chambre (34) de régulation, la chambre (34) de régulation étant délimitée en partie par une surface (66) de tête du pointeau (18) d'injecteur et en partie par ladite surface (58) de réaction de ladite plaque (50) de tête, la surface (66) de tête du pointeau (18) d'injecteur, dans la position ouverte du pointeau (18) d'injecteur, portant contre ladite surface (58) de réaction, et un trou borgne (72) étant formé dans la plaque (50) de tête, ledit trou borgne (72 formant une partie d'épaisseur réduite de la plaque (50) de tête, la plaque (50) de tête comportant un diaphragme intégré (120) formé entre une première surface constituée d'une partie de la surface (58) de réaction en contact direct avec le fluide sous pression contenu dans la chambre hydraulique (34) et une seconde surface opposée à la première surface, située au fond du trou borgne (72), qui n'est pas en contact avec le fluide sous pression contenu dans la chambre hydraulique (34), et
- un capteur (70) logé dans ledit trou borgne (72) formé dans la plaque (50) de tête et isolé de la chambre (34) de régulation de l'injecteur (10) par ledit diaphragme (120), qui fournit un signal électrique indicatif des déformations dudit diaphragme (120) .

6. Injecteur selon la revendication 5, ledit capteur (70) étant un transducteur piézoélectrique.

7. Injecteur selon la revendication 5, ledit trou (72) présentant une surface latérale (74) coaxiale audit axe longitudinal (A) et une surface (76) de fond parallèle et opposée à la surface (58) de réaction du diaphragme (120).

8. Injecteur selon l'une quelconque des revendications 5 à 7, ledit capteur (70) comportant deux éléments piézoélectriques (78, 80) orientés perpendiculairement audit axe longitudinal (A) et une électrode (82) disposée entre lesdits éléments piézoélectriques (78, 80).

9. Injecteur selon l'une quelconque des revendications 5 à 8, comportant une carte électronique (94) située sur l'injecteur (10) et configurée pour être reliée à un système (108) de traitement servant à traiter le signal (V) fourni par ledit capteur (70).
